# EUROPÄISCHE PATENTSCHRIFT

(11) **EP 1 279 059 B1**
(45) Veröffentlichungstag und Bekanntmachung des Hinweises auf die Patenterteilung: **22.09.2004**
(21) Anmeldenummer: 01990448.1
(22) Anmeldetag: 28.11.2001
(51) Int. Cl.: G02B 21/24, H01H 13/02, H01H 13/70, H01H 23/02, G05G 1/10

(54) **MIKROSKOP**
MICROSCOPE
MICROSCOPE

(30) Priorität: 01.12.2000 DE 10060456
(43) Veröffentlichungstag der Anmeldung: 29.01.2003
(73) Patentinhaber: CARL ZEISS JENA GmbH, 07745 Jena (DE)
(72) Erfinder: GONSCHOR, Matthias, 37130 Gleichen (DE)
(86) Internationale Anmeldenummer: PCT/EP2001/013875
(87) Internationale Veröffentlichungsnummer: WO 2002/044787

(56) Entgegenhaltungen:
- DE-A- 4 231 379
- DE-C- 19 643 558
- DE-U- 8 702 558
- US-A- 4 905 127
- US-A- 5 073 843

## Beschreibung

Die Erfindung betrifft ein Mikroskop, welches mit einer Vielzahl von Komponenten wie Objektivrevolver, diverse Filter und Blenden, regelbaren Beleuchtungseinrichtungen, usw. ausgerüstet sein kann.

Bei modemen Mikroskopen ist diese Vielzahl von Komponenten häufig elektrisch oder manuell schaltbar. Zur Bedienung weisen diese Mikroskope daher im Normalfall eine entsprechende Zahl von Bedienelementen (Schalter, Taster, Drehknöpfe, Hebel, Verstellräder) auf, welche möglichst ergonomisch angeordnet sind. Diese Bedienelemente können dabei sowohl am Mikroskopstativ als auch auf separaten Bedienpulten untergebracht sein.
Häufig weisen diese Bedienelemente Beschriftungen oder Skalen auf, welche den Zustand der zugehörigen Mikroskopkomponente anzeigen, z. B. für die verschiedenen Filtersätze im Reflektorrevolver oder die Position des Fokustriebs (z-Position).
Es kommt häufig vor, dass die Untersuchung mikroskopischer Präparate in dunkler oder stark abgedunkelter Umgebung stattfindet um den Einfluss von Fremdlicht auf die mikroskopische Abbildung zu eliminieren oder zu minimieren. Dies ist insbesondere bei der Beobachtung schwacher Fluoreszenzen oder Luminiszenzen der Fall.
Die dunkle Umgebung erschwert dem Mikroskopierenden die Bedienung des Gerätes, da die Bedienelemente dann nicht mehr gesehen oder abgelesen werden können.
Es ist bekannt (z.B. Bedienpult zum Mikroskop "Axiotron 2" der Anmelderin, Broschüre 40-405 e/05.00) auf den Tasten des Bedienpultes LEDs (Lichtemittierende Dioden) anzubringen, um den gegenwärtigen Schaltzustand der Bedienelemente zu signalisieren, eine Hilfe bei der Orientierung sind diese LEDs jedoch nicht, da sie immer erst nach der Betätigung der entsprechenden Taste aktiv werden.

Aufgabe der Erfindung ist es daher die Nachteile des Standes der Technik zu überwinden und die Bedienung sowohl elektrisch steuerbarer bzw. motorisierter als auch manuell zu bedienender Mikroskope zu vereinfachen.

Die Aufgabe wird bei einem Mikroskop gemäss dem Oberbegriff des ersten Anspruchs durch die kennzeichnenden Merkmale des Anspruchs 1 gelöst. Vorteilhafte Ausgestaltungen sind in den Unteransprüchen beschrieben.
Eine vorteilhafte erfindungsgemässe Ausführungsformen besteht darin, dass die Beleuchtung der Bedienelemente in Abhängigkeit vom freigegebenen Strahlengang im Mikroskop automatisch geschaltet wird, z.B. dass bei Freigabe des Fluoreszenzstrahlenganges die Bedienelementebeleuchtung verringert wird, damit kein störendes Licht von der Beleuchtung auf die zu untersuchende Probe fallen kann. Dabei ist es vorteilhaft, wenn die Beleuchtung der Bedienelemente mittels eines Schalters zwischen zwei Helligkeiten geschaltet werden kann. Dabei kann sowohl das Ausschalten der Bedienelementebeleuchtung als auch eine deutliche Verringerung ihrer Helligkeit vorgesehen sein.
Es ist von Vorteil, wenn die Beleuchtungseinrichtungen so angebracht und gerichtet sind, dass die Beschriftungen bzw. Skalen der Bedienelemente derart beleuchtet werden, dass der Bediener des Mikroskops diese von seiner normalen Position aus ablesen kann.
Als Mittel zur Beleuchtung kommen im Prinzip beliebige Leuchtmittel wie Miniaturglühlampen, LEDs (lichtemittierende Dioden) o.ä. in Betracht. Es kann aber auch das Licht mittels Lichtleitfaser an die zu beleuchtende Stelle herangeführt werden.
Eine weitere vorteilhafte Ausgestaltung der Erfindung besteht darin, dass die Bedienelemente selbst die Beleuchtungseinrichtungen aufweisen und damit als selbstleuchtende Tasten oder Knöpfe ausgeführt sind.
Eine andere vorteilhafte Ausführungsform der Erfindung weist vorzugsweise in der Nähe der Okulare einen Sensor auf, welcher die Annäherung des Kopfes des Bedieners an die Okulare detektiert, und welcher so mit der Bedienelementebeleuchtung gekoppelt ist, dass diese ausgeschaltet oder in ihrer Helligkeit verringert wird, solange der Bediener durch die Okulare blickt.

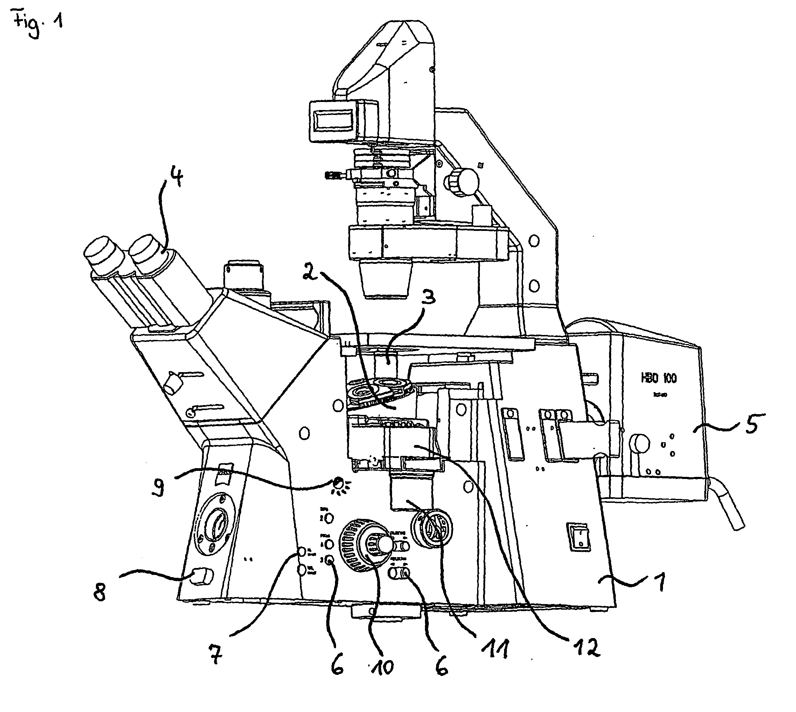

In der Zeichnung ist ein Ausführungsbeispiel eines erfindungsgemässen Mikroskops anhand eines inversen Mikroskops schematisch dargestellt.
An dem Mikroskopstativ 1 sind ein motorischer Objektivrevolver 2 mit (hier nur einem) Objektiv 3, Okulare 4, ein motorischer Reflektorrevolver 12 und eine regelbare Objektbeleuchtungseinrichtung 5 für die Fluoreszenzanregung angebracht. Innerhalb des Stativs befindet sich im Fluoreszenz-Strahlengang ein hier nicht dargestellter Shutter zum Sperren und Freigeben des Strahlenganges welcher über ein Bedienelement 7 gesteuert wird. Weiterhin verfügt das Stativ 1 über einen Fokustriebknopf 10 und eine Anzahl von Bedientasten 6, welche ergonomisch in der Nähe des Fokustriebknopfs angeordnet sind. Mittels des Fokustriebknopfs 10 wird über einen nicht dargestellten, im Mikroskopstativ 1 eingebauten Steuerrechner der Fokustrieb 11 motorisch betätigt. Der Fokustriebknopf weist eine Skala auf, mit deren Hilfe Fokuspositionen abgelesen werden können.

An der Seite des Stativs 1, in der Nähe der Bedienelemente 6 und des Fokustriebknopfs 10, ist eine Beleuchtungseinrichtung 9 angebracht. Diese ist beispielsweise als lichtemittierende Diode (LED) ausgeführt, kann jedoch auch ein anderes Leuchtmittel wie z.B. eine Miniaturglühlampe verwenden. Diese Beleuchtungseinrichtung ist so platziert und gerichtet, dass sie im eingeschalteten Zustand die Bedienelemente so beleuchtet, dass der Bediener des Mikroskops die Beschriftung der Bedienelemente gut erkennen kann, ohne dass er gezwungen ist, den Kopf weit von der normalen Beobachtungsposition (an den Okularen) zu entfemen.
Ein bestimmtes Bedienelement 8 bewirkt bei seiner Betätigung, dass die Beleuchtung der Bedienelemente ein- bzw. ausgeschaltet wird. Als Bedienelement kann z.B. eine Taste oder ein Schalter verwendet werden. Dieses Bedienelement 8 kann auch so ausgeführt sein, dass es eine dritte Schaltstellung aufweist, bei welcher das Ein- und Ausschalten der Beleuchtung der Bedienelemente an den Schaltzustand des dem Shutter für den Fluoreszenzstrahlengang zugeordneten Bedienelementes 7 gekoppelt ist. Dabei erfolgt die Kopplung in der Art, dass die Bedienelementebeleuchtung ausgeschaltet wird, wenn der Fluoreszenzstrahlengang freigegeben wird. Damit wird sichergestellt, dass während der Beobachtung von Fluoreszenzen kein störendes Licht von der Bedienelementebeleuchtung auf die Probe fällt.

Die Erfindung ist nicht an das dargestellte Ausführungsbeispiel gebunden.
So können auch mehrere Beleuchtungseinrichtungen für die verschiedenen Bedienelemente des Mikroskops vorgesehen sein.
Im Fall der Benutzung von Lichtleitfasern zur Beleuchtung der Bedienelemente ist auch vorstellbar, dass Licht von einer der zur Beleuchtung der Probe vorgesehenen Lichtquellen in die Lichtleitfasern eingekoppelt wird, z.B dass bei geschlossenem Shutter für den Fluoreszenzstrahlengang das Licht auf die Einkoppelstelle der Lichtleitfasern fällt, bei geöffnetem Shutter jedoch von den Lichtleitfasern abgeblockt wird.
Es ist ebenfalls möglich, die Beleuchtung der Bedienelemente durch an oder in den Bedienelementen angebrachte Leuchtmittel zu realisieren, indem z.B. LEDs in die Schalter bzw. Tasten integriert werden.
Die Steuerung der Bedienelementebeleuchtung kann auch mit einem Sensor gekoppelt werden, welcher in der Nähe der Okulare angebracht ist, die Annäherung des Bedieners des Mikroskops an die Okulare beim Mikroskopieren erkennen kann und dabei die Bedienelementebeleuchtung ausschaltet oder verringert. Ein solcher Sensor ist z.B. aus der Schrift JP1011146A2 an sich bekannt.

Weiterhin ist die Erfindung sowohl bei aufrechten als auch bei inversen sowie motorisierten als auch manuellen Mikroskopen anwendbar.

## Patentansprüche

1. Mikroskop mit einem Mikroskopstativ, welches Mikroskopkomponenten wie Objektivrevolver (2), Blenden, Filter, Kondensor, Lichtwegeschalter (z.B. zur Freigabe eines Fluoreszenz-Strahlenganges) u.s.w. enthält, welche vorzugsweise elektrisch ansteuerbar sind, und bei dem Bedienelemente (6,7) für diese Mikroskopkomponenten vorhanden sind, **gekennzeichnet dadurch, dass** mindestens eine Einrichtung (9) zur Beleuchtung dieser Bedienelemente (6,7) vorhanden ist und dass Mittel vorhanden sind, welche diese Beleuchtung in Abhängigkeit von der Stellung mindestens einer dieser Mikroskopkomponenten schalten.

2. Mikroskop nach Anspruch 1, **gekennzeichnet dadurch, dass** die Einrichtung zur Beleuchtung der Bedienelemente mit einem der Bedienelemente (6,7) zur Ansteuerung der Mikroskopkomponente gekoppelt ist, wobei die Kopplung vorzugsweise elektrisch ist.

3. Mikroskop nach Anspruch 1, **gekennzeichnet dadurch, dass** die Beleuchtung der Bedienelemente bei Betätigung des Bedienelements zur Ansteuerung der Freigabe des Fluoreszenzstrahlenganges verringert wird.

4. Mikroskop nach Anspruch 1, **gekennzeichnet dadurch, dass** die Einrichtung zur Beleuchtung der Bedienelemente so gerichtet und/oder am Mikroskopstativ angebracht ist, dass eine Beschriftung der Bedienelemente von der normalen Position eines Bedieners des Mikroskops aus sichtbar ist.

5. Mikroskop nach Anspruch 1, **gekennzeichnet dadurch, dass** die Einrichtung zur Beleuchtung der Bedienelemente näherungsweise in einer gedachten Verbindungslinie zwischen den Okularen des Mikroskops und den Bedienelementen der Mikroskopkomponenten angeordnet ist und vorzugsweise in Blickrichtung eines Bedieners des Mikroskops auf die Bedienelemente abstrahlt.

6. Mikroskop nach einem der vorigen Ansprüche, **gekennzeichnet dadurch, dass** ein Bedienelement (8) zum Schalten der Beleuchtung der Bedienelemente vorhanden ist, welches Schaltstellungen für
- Beleuchtung einschalten
- Beleuchtung ausschalten bzw. verringern
- Beleuchtung in Abhängigkeit von der Stellung mindestens einer der Mikroskopkomponenten schalten
aufweist.

7. Mikroskop nach Anspruch 1, **gekennzeichnet dadurch, dass** die Einrichtung zur Beleuchtung der Bedienelemente ein Leuchtmittel wie z.B. eine lichtemittierende Diode oder eine Miniaturglühlampe aufweist.

8. Mikroskop nach Anspruch 1, **gekennzeichnet dadurch, dass** die Einrichtung zur Beleuchtung der Bedienelemente mindestens eine Lichtleitfaser aufweist, in welche Licht von einem Leuchtmittel eingekoppelt werden kann.

9. Mikroskop nach Anspruch 1, **gekennzeichnet dadurch, dass** die Einrichtung zur Beleuchtung der Bedienelemente in die Bedienelemente integriert ist.

10. Mikroskop nach Anspruch 1, **gekennzeichnet dadurch, dass** ein Sensor angebracht ist, vorzugweise in der Nähe der Okulare, welcher auf die Annäherung des Bedieners des Mikroskops reagiert, und welcher mit der Einrichtung zur Beleuchtung der Bedienelemente des Mikroskops derart gekoppelt ist, dass er bei Annäherung des Bedieners die Beleuchtung der Bedienelemente reduziert oder abschaltet.

## Claims

1. Microscope having a microscope stand which contains microscope components such as the lens revolver (2), diaphragms, filters, condenser, light path switches (e.g. to allow the free passage of a fluorescence beam path) etc. which are preferably electrically operable, and wherein operating elements (6, 7) for these microscope components are present, **characterised in that** at least one device (9) is present for illuminating these operating elements (6, 7) and that means are present which switch this illumination in dependence upon the position of at least one of these microscope components.

2. Microscope as claimed in claim 1, **characterised in that** the device for illuminating the operating elements is coupled to one of the operating elements (6, 7) for actuating the microscope component, wherein the coupling is preferably electrical.

3. Microscope as claimed in claim 1, **characterised in that** the illumination of the operating elements is reduced upon actuation of the operating element for actuating the free passage of the fluorescence beam path.

4. Microscope as claimed in claim 1, **characterised in that** the device for illuminating the operating elements is directed and/or attached to the microscope stand in such a manner that any labelling of the operating elements is visible from the normal position of an operator of the microscope.

5. Microscope as claimed in claim 1, **characterised in that** the device for illuminating the operating elements is disposed approximately in an imaginary connection line between the eyepieces of the microscope and the operating elements of the microscope components and emits light on to the operating elements preferably in the direction of view of an operator of the microscope.

6. Microscope as claimed in any of the preceding claims, **characterised in that** an operating element (8) for switching the illumination of the operating elements is present which comprises switching positions for
- switching on the illumination
- switching off or reducing the illumination
- switching the illumination in dependence upon the position of at least one of the microscope components.

7. Microscope as claimed in claim 1, **characterised in that** the device for illuminating the operating elements comprises a lighting means, such as e.g. a light-emitting diode or a miniature filament lamp.

8. Microscope as claimed in claim 1, **characterised in that** the device for illuminating the operating elements comprises at least one light-conducting fibre, into which light from a lighting means can be coupled.

9. Microscope as claimed in claim 1, **characterised in that** the device for illuminating the operating elements is integrated into the operating elements.

10. Microscope as claimed in claim 1, **characterised in that** preferably in the vicinity of the eyepieces there is provided a sensor which reacts to the operator of the microscope moving closer and is coupled to the device for illuminating the operating elements of the microscope such that as the operator moves closer it reduces or switches off the illumination of the operating elements.

## Revendications

1. Microscope avec un support de microscope, qui contient des composants de microscope, comme des révolvers porte-objectif (2), des diaphragmes, des filtres, un condensateur, des commutateurs de trajet optique (par exemple pour libérer une marche des rayons à fluorescence) etc., qui peuvent être commandés de préférence d'une manière électrique, et dans lequel sont réalisés des éléments de commande (6, 7) pour ces composants de microscope, **caractérisé en ce qu'**il est réalisé au moins une installation (9) pour éclairer ces éléments de commande (6, 7), et **en ce que** des moyens sont réalisés qui commutent cet éclairage en fonction de la position d'au moins l'un de ces composants de microscope.

2. Microscope selon la revendication 1, **caractérisé en ce que** l'installation d'éclairage des éléments de commande est couplée à l'un des éléments de commande (6, 7) pour la commande du composant du microscope, où le couplage est de préférence électrique.

3. Microscope selon la revendication 1, **caractérisé en ce que** l'éclairage des éléments de commande est diminué lors de l'actionnement de l'élément de commande pour commander la libération de la marche des rayons à fluorescence.

4. Microscope selon la revendication 1, **caractérisé en ce que** l'installation d'éclairage des éléments de commande est orientée et/ou fixée au support du microscope de façon qu'une inscription sur les éléments de commande est visible à partir de la position normale d'un opérateur du microscope.

5. Microscope selon la revendication 1, **caractérisé en ce que** l'installation d'éclairage des éléments de commande est disposée approximativement dans une ligne de liaison imaginaire entre les oculaires du microscope et les éléments de commande des composants du microscope, et rayonne de préférence dans la direction de vision d'un opérateur du microscope sur les éléments de commande.

6. Microscope selon l'une des revendications précédentes, **caractérisé en ce qu'**il est réalisé un élément de commande (8) pour la commutation de l'éclairage des éléments de commande, qui présente des positions de commutations pour
- allumer éclairage
- éteindre ou diminuer éclairage
- commuter éclairage en fonction de la position d'au moins l'un des composants du microscope.

7. Microscope selon la revendication 1, **caractérisé en ce que** l'installation d'éclairage des éléments de commande présente un moyen lumineux, comme par exemple une diode luminescente ou une lampe miniature à incandescence.

8. Microscope selon la revendication 1, **caractérisé en ce que** l'installation d'éclairage des éléments de commande présente au moins une fibre optique dans laquelle peut être couplée la lumière d'un moyen lumineux.

9. Microscope selon la revendication 1, **caractérisé en ce que** l'installation d'éclairage des éléments de commande est intégrée dans les éléments de commande.

10. Microscope selon la revendication 1, **caractérisé en ce qu'**un détecteur est disposé de préférence au voisinage des oculaires, qui réagit à l'approche de l'opérateur du microscope, et qui est couplé à l'installation d'éclairage des élements de commande du microscope de façon que lors de l'approche de l'opérateur, il réduit ou éteint l'éclairage des éléments de commande.
